# EUROPEAN PATENT APPLICATION

(11) **EP 4 563 764 A1**
(43) Date of publication of application: **04.06.2025**
(21) Application number: 23213071.6
(22) Date of filing: 29.11.2023
(51) Int. Cl.: E03F 5/04, E03F 5/10, E03F 7/02, F16K 31/04, F16K 31/50

(54) **EMERGENCY VALVE SYSTEM**

(71) Applicant: Biondi, Stefano, 30176 Venice (IT)
(72) Inventor: Biondi, Stefano, 30176 Venice (IT)

(57) **Abstract**

001. Emergency valve system for blocking contaminated stormwater volumes exiting drainage inlets, or flowing through pipe networks. The invention includes: a valve body, valve frame, valve cover, closing plate, baffle plates, actuator screw, protection cover. The emergency valve system may be: a) electrically operated by including a motor inserted between the valve body and the valve cover, engaged to the actuator screw, to rotate the said actuator screw and therefore raising or lowering the closing plate; or b) manually operated by including an external adjusting screw engaged with the actuator screw, so that the closing plate can be raised or lowered by rotating the said external adjusting screw. In the case of an electrically operated emergency valve system, the invention may include a battery to power the motor, and/or a power cord to power the motor from an external power supply system. The invention may also include one on several water sensor probes attached to the valve body to monitor the water quality.

## Description

### FIELD OF INVENTION

002. This application relates generally to emergency valve systems that regulate stormwater volumes exiting drainage inlets or flowing through pipe networks. More particularly, the novel emergency valve system can be electrically/manually activated to block contaminated spills.

### BACKGROUND INFORMATION

003. Stormwater runoff conveyed from urbanized and industrialized areas into drainage networks may contain contaminants such as suspended solids, hydrocarbons, microplastics, toxic heavy metals, nutrients, that need to be stopped before being released into water bodies. The blockage of such contaminated stormwater runoff can be achieved within the drainage inlets that receive and collects the said contaminated stormwater runoff, or further downstream within the drainage pipe network.

004. Few examples of patented valve devices in the field of stormwater and flowrate control has been found in the literature. Exemplary valve devices in such fields are briefly presented in the following paragraphs, to demonstrate the novelties of the device presented in this application.

005. Patent US2003094407A1 describes a filter assembly that filters water, particularly stormwater, that includes flow regulating, siphon inducing, and surface cleaning features that allow the filter assembly to operate at the design filtration rate for an extended period. During filtration, water flows inward through an annular filter medium into a drain manifold. The rate of flow into the drain manifold is controlled by a float valve assembly. A check valve permits air to escape, but not enter, the filter assembly creating a siphon effect when the rate of flow into the drain manifold is increased.

006. From the analysis of Patent US2003094407A1, it is clear that: a) the float valve assembly is coupled with an annular filter medium, and it's not intended to operate as a single valve control device; b) the float valve assembly provides a passive control the rate of flow into the drain during infiltration; c) the float valve assembly cannot be automated by a motor or other equivalent power devices.

007. Patent EP4070001A1 describes a rotary valve and float assembly for controlling a flow of liquid into a container including a plug valve portion and a divider portion. The plug valve portion including a set of plugs that seal against a set of openings in the divider portion when the rotary valve is in a closed position. Movement of the rotary valve between open and closed positions is controlled by the movement of the float assembly in the container. The float assembly typically moves according to a liquid level within the container.

008. From the analysis of Patent EP4070001A1, it becomes clear that, while the invention allows control of flowrate entering collection tanks, reservoirs, or other liquid storage containers, it's poorly fitted for blocking stormwater discharges from drainage inlets. Moreover, the invention does not include a motorised control of the valve opening/closing mechanism.

009. The review of current valve systems for stormwater flowrate control in drainage networks shows how novel approaches and technologies are needed for: a) blocking such polluted stormwater volumes within drainage inlet before they reach the stormwater pipe network, as well as for b) blocking such polluted stormwater volumes within the pipe network before they reach the receiving water bodies. The present invention fulfils these needs and provides for further related advantages.

### SUMMARY OF INVENTION

010. The present invention provides a novel emergency valve system for blocking contaminated stormwater runoff. The invention can be implemented to regulate and block stormwater runoff discharges exiting drainage inlets, or it can be installed within pipe networks.

011. The invention comprises: a valve body, which forms the backbone of the emergency valve system and provides rigidity and mechanical resistance to the valve system; valve frame, which allows the emergency valve system to be secured to drainage inlets; valve cover, to protect the internal components of the emergency valve system from the external environment; closing plate, implemented to regulate flow discharges from the drainage inlet where said emergency valve system is installed; baffle plates, designed to decrease the air content in the flow discharged through the emergency valve system, and therefore increasing the flow capacity of the valve; actuator screw, which allows the closing plate to be raised or lowered; protection cover, to protect the actuator screw from the external environment.

012. The emergency valve system may be: a) electrically operated by including a motor inserted between the valve body and the valve cover, engaged to the actuator screw, to rotate the said actuator screw and therefore raising or lowering the closing plate; or b) manually operated by including an external adjusting screw engaged with the actuator screw, so that the closing plate can be raised or lowered by rotating the said external adjusting screw.

013. In the case of electrically operated emergency valve system, the invention may include a battery to power the motor, and/or a power cord to power the motor from an external power supply system.

014. The invention may also include one on several water sensor probes attached to the valve body to monitor the water quality.

015. The intention can be installed in many configurations for regulating and blocking stormwater runoff discharges. Typical configurations include: a) valve system placed within a drainage inlet on top of an outlet pipe; b) valve system placed within control chamber along drainage pipe network, oriented so that the closing plate is perpendicular to the discharge direction.

016. Overall, the emergency valve system allows a quick and efficient blockage of contaminated stormwater runoff or accidental spills before they reach the receiving water bodies. The invention can be installed in a variety of drainage inlets, including airports, ports, terminals, as well as general industrial sites, parking lots, service stations, restaurants, residences, and multi-family housing. Additionally, no invasive building or civil work is required for the installation, and the architecture of the drainage inlets does not need to be changed.

017. These and other aspects of the present invention will be more apparent from the following description.

### BRIEF DESCRIPTION OF THE DRAWINGS

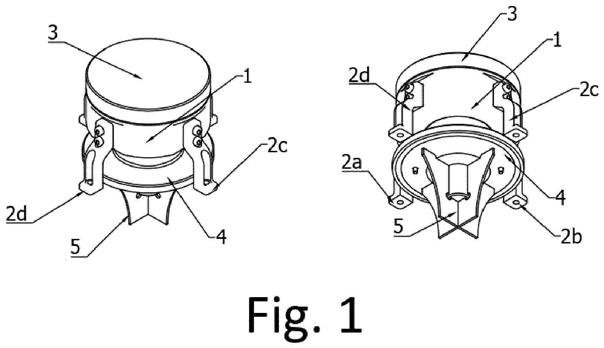

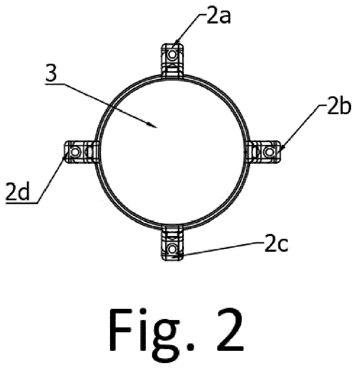

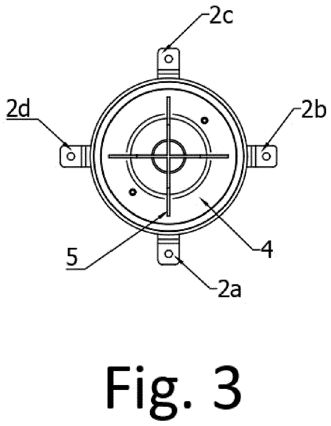

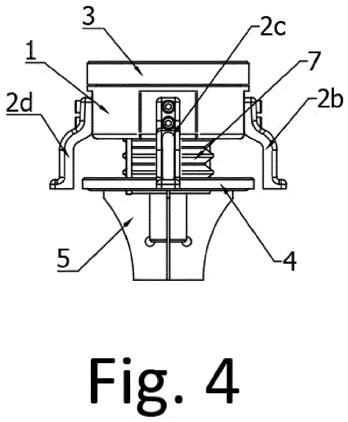

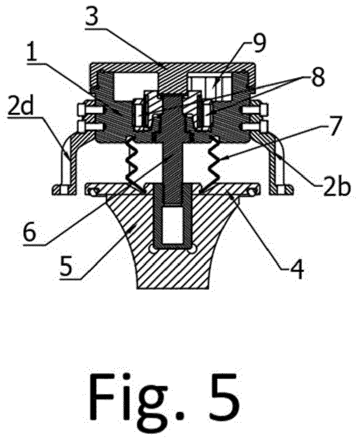

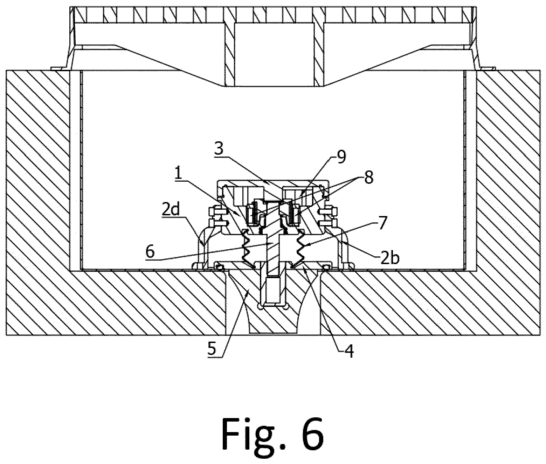

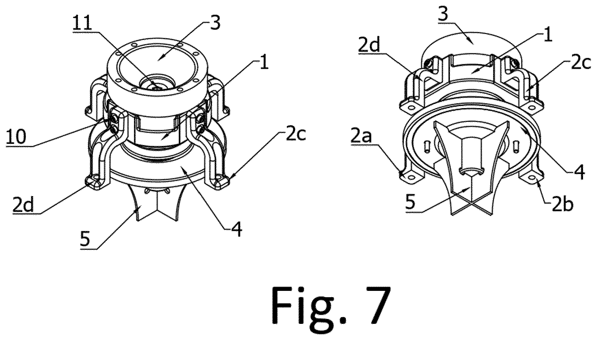

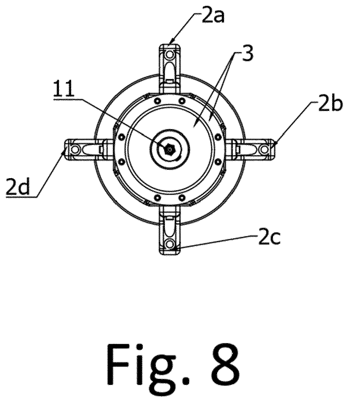

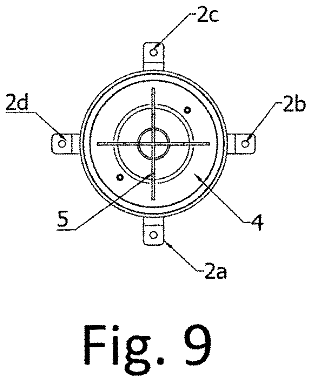

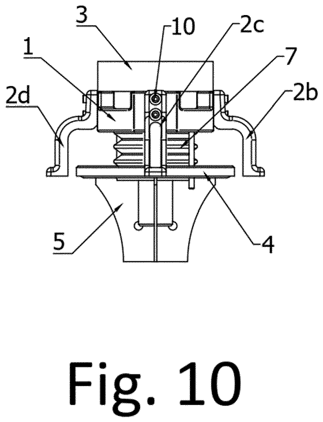

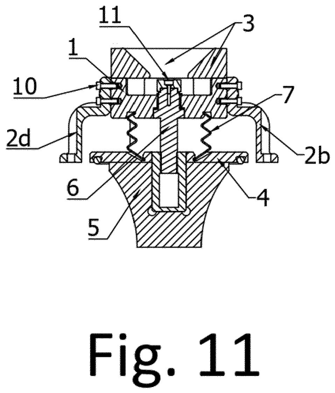

018. Fig. 1: shows a perspective view of the emergency valve system constructed according to an embodiment of the present invention, which includes a motor and a battery to power the said motor (electrically operated emergency valve system).
019. Fig. 2: shows the top view of the emergency valve system constructed according to an embodiment of the present invention, which includes a motor and a battery to power the said motor (electrically operated emergency valve system).
020. Fig. 3: shows the bottom view of the emergency valve system constructed according to an embodiment of the present invention, which includes a motor and a battery to power the said motor (electrically operated emergency valve system).
021. Fig. 4: shows the side view of the emergency valve system constructed according to an embodiment of the present invention, which includes a motor and a battery to power the said motor (electrically operated emergency valve system).
022. Fig. 5: shows the cross-sectional view of the emergency valve system constructed according to an embodiment of the present invention, which includes a motor and a battery to power the said motor (electrically operated emergency valve system).
023. Fig. 6: shows a perspective view of the emergency valve system, constructed according to an embodiment of the present invention, installed within a typical drainage inlet (electrically operated emergency valve system).
024. Fig. 7: shows a perspective view of the emergency valve system constructed according to an embodiment of the present invention, which includes an external adjusting screw so that the valve can be manually controlled by an operator (manually operated emergency valve system).
025. Fig. 8: shows the top view of the emergency valve system constructed according to an embodiment of the present invention, which includes an external adjusting screw so that the valve can be manually controlled by an operator (manually operated emergency valve system).
026. Fig. 9: shows the bottom view of the emergency valve system constructed according to an embodiment of the present invention, which includes an external adjusting screw so that the valve can be manually controlled by an operator (manually operated emergency valve system).
027. Fig. 10: shows the side view of the emergency valve system constructed according to an embodiment of the present invention, which includes an external adjusting screw so that the valve can be manually controlled by an operator (manually operated emergency valve system).
028. Fig. 11: shows the cross-sectional view of the emergency valve system constructed according to an embodiment of the present invention, which includes an external adjusting screw so that the valve can be manually controlled by an operator (manually operated emergency valve system).

### DETAILED DESCRIPTION OF THE DRAWINGS

029. In the following detailed description, reference is made to the accompanying drawings, which form a part hereof. The detailed description is not meant to be limiting, and the drawings are intended to be illustrative of certain preferred embodiments of the present invention. Other embodiments may be utilized, and other changes may be made, without departing from the spirit or scope of the subject matter presented herein.

030. As shown in the drawings, the present invention comprises a valve body **1,** valve frame **2,** valve cover **3,** closing plate **4,** baffle plates **5,** actuator screw **6,** protection cover **7.**

031. In the embodiments of the present invention shown in the drawings, valve frame **2** consists of four (4) valve feet **2a, 2b, 2c, 2d** allowing the valve system to be secured to an external support (the external support varies based on the emergency valve implementation, ex: drainage inlet walls). Moreover, the components of the said emergency valve system are fastened by bolted joints **10.**

032. The valve body **1** forms the backbone of the valve system and provides rigidity and mechanical resistance to the valve system. The number and position of the valve feet **2** may vary to be adapted to specific installation. The valve cover **3** protects the internal components of the emergency valve system from the external environment. The closing plate **4** allows the valve system to regulate flow discharges. The baffle plates **5** are designed to decrease the air content in the flow discharged through the emergency valve system, and therefore increasing the flow capacity of the valve. The actuator screw **6** runs along the vertical axis of the valve system, is engaged to the closing plate **4** and allows the said closing plate **4** to be raised or lowered. The protection cover **7** protects the actuator screw **6** from the external environment.

033. Drawings **Fig. 1****,** **Fig. 2****,** **Fig. 3****,** **Fig. 4****,** **Fig. 5** show an embodiment of the present invention in which the valve system also features a motor **8** and a battery **9** to power the motor **8** (motor **8** and battery **9** are inserted between the valve body **1** and valve cover **3**). The actuator screw **6** is engaged and moved by the motor **8,** inserted between valve body **1** and valve cover **3,** and concentrical to the said actuator screw **6.** The actuator screw **6** rotates along its vertical axis, raising or lowering the closing plate. A typical implementation of such configuration is on top of a pipe exiting a drainage inlet, to regulate and block the outlet discharge, as shown in **Fig. 6****.**

034. Drawings **Fig. 7****,** **Fig. 8****,** **Fig. 9****,** **Fig. 10****,** **Fig. 11** show an embodiment of the present invention in which the valve system features an external adjusting screw **11** engaged with the actuator screw **6,** so that the closing plate can be manually raised or lowered by rotating the external adjusting screw.

## Claims

1. An emergency valve system for stormwater management **characterised by**:
a) Valve body, which forms the backbone of the emergency valve system and provides rigidity and mechanical resistance to the emergency valve system.
b) Valve frame, which allows the emergency valve system to be secured to an external support.
c) Valve cover, to protect the internal components of the emergency valve system from the external environment.
d) Closing plate, which allows the emergency valve system to regulate flow discharge.
e) Actuator screw, engaged to the closing plate to allow the said closing plate to be raised and lowered.
f) Baffle plates, designed to decrease the air content in the flow discharged through the emergency valve system, and therefore increasing the flow capacity of the valve.
g) Protection cover, to protect the actuator screw from the external environment.

2. The emergency valve system of claim 1 further comprising a motor, inserted between the valve body and the valve cover, engaged to the actuator screw to move the said actuator screw.

3. The emergency valve system of claim 2 further comprising a battery to power the motor.

4. The emergency valve system of claim 2 and 3 further comprising a power cord to power the motor from an external power supply system.

5. The emergency valve system of claim 1 further comprising an external adjusting screw engaged with the actuator screw, so that the closing plate can be manually raised and lowered by rotating the said external adjusting screw.

6. The emergency valve system of claim 1, 2, 3, 4 and 5 further comprising one on several water sensor probes attached to the valve body, to monitor the water quality.
